(19) **Europäisches Patentamt / European Patent Office / Office européen des brevets**

(11) **EP 4 703 843 A1**

(12) **EUROPEAN PATENT APPLICATION**
published in accordance with Art. 153(4) EPC

(43) Date of publication:
04.03.2026 Bulletin 2026/10

(21) Application number: 24796127.9

(22) Date of filing: 24.04.2024

(51) International Patent Classification (IPC):
*G06E 3/00* (2006.01)  *G02F 1/025* (2006.01)

(52) Cooperative Patent Classification (CPC):
G02F 1/025; G06E 3/00

(86) International application number:
PCT/CN2024/089613

(87) International publication number:
WO 2024/222751 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.04.2023 CN 202310473213
07.06.2023 CN 202310669033
02.08.2023 CN 202310965549

(71) Applicant: Lightstandard Co., Ltd.
Suzhou, Jiangsu 215000 (CN)

(72) Inventors:
• CHENG, Tangsheng
Suzhou, Jiangsu 215000 (CN)
• PU, Huanan
Suzhou, Jiangsu 215000 (CN)
• HU, Zixin
Suzhou, Jiangsu 215000 (CN)

(74) Representative: Novagraaf Group
Chemin de l'Echo 3
1213 Onex / Geneva (CH)

(54) **PHOTONIC COMPUTING METHOD, PHOTONIC COMPUTING ARRAY, AND PHOTOELECTRIC HYBRID COMPUTING METHOD AND ARRAY**

(57) The present invention relates to the field of optical computing technology, and in particular, to a method for performing a computation in an optical domain by means of a photonic computing unit, the method comprises the following steps: S101. Encoding a multiplier value into a write signal; S102. Mapping the multiplier value to a state of an electro-optic modulator by using the write signal, the state is represented by an absorption coefficient $\alpha$ of an optical waveguide for light under different concentrations of a free carrier; S103. Encoding a multiplicand value into an input signal; S104. Generating an output signal intensity when the input signal passes through a doped region of the electro-optic modulator via the first optical waveguide, wherein a product of the multiplier value and the multiplicand value is encoded into the output signal intensity. Accordingly, the present invention further provides a photonic computing array, an optoelectronic hybrid computing method, and an array thereof for on-chip large-scale matrix multiplication operation.

Encoding a multiplier value into a write signal — S101

Mapping the multiplier value to a state of an electro-optic modulator by using the write signal, the state is represented by an absorption coefficient $\alpha$ of a optical waveguide for light under different concentrations of a free carrie — S102

Encoding a multiplicand value into an input signal — S103

Generating the intensity of an output signal when the input signal passes through adoped region of the electro-optic modulator via a first optical waveguide, wherein aproduct of the multiplier value and the multiplicand value is encoded in the intensity of the output signal — S104

Fig. 1

**Description**

**PRIORITY APPLICATION**

This application claims priority to a Chinese invention patent application filed on April 27, 2023 [Application No.: CN2023104732135], [Invention Title: A METHOD FOR PERFORMING COMPUTATION IN AN OPTICAL DOMAIN VIA A PHOTONIC COMPUTING UNIT]; and the Chinese invention patent application filed on June 7, 2023 [Application No.: CN2023106690334], [Invention Title: PHOTONIC COMPUTING ARRAY FOR ON-CHIP LARGE-SCALE MATRIX MULTIPLICATION]; and the Chinese invention patent application filed on August 2, 2023 [Application No.: CN2023109655493] [Invention Title: OPTOELECTRONIC HYBRID COMPUTING METHOD AND ARRAY FOR ON-CHIP LARGE-SCALE MATRIX MULTIPLICATION CALCULATION], which are incorporated herein by reference in their entirety.

**TECHNICAL FIELD**

This invention relates to the field of optical computing technology, and in particular to a method for performing a computation in an optical domain using a photonic computing unit, as well as an optoelectronic computing array and a hybrid optoelectronic computing method and array based on the photonic computing unit.

**BACKGROUND**

With the advanced chip technology approaching the physical limit, the development of integrated circuits is facing great challenges. Collaborative innovation and breakthroughs in technologies such as new materials, new devices, new principles, and new architectures are important ways to meet the challenges in the field of microelectronics. At the same time, the rapid development of emerging technologies such as natural language processing, image recognition, and autonomous driving based on artificial intelligence comes at the expense of a large amount of computing resources and energy consumption. The wide application of artificial intelligence urgently requires the development of new computer hardware and systems with low power consumption and high performance, which puts forward higher requirements for integrated circuit technology. Photonic computing chips based on silicon-based optoelectronic technology use materials and processes compatible with integrated circuits to transmit and process information in the optical domain. They have faster speed, larger bandwidth, and lower energy consumption, making them an effective way to solve the performance bottlenecks and information congestion faced by integrated circuits.

In photonic computing chips, light is transmitted and computed in waveguides, which has advantages such as high integration and compatibility with traditional electronic chips, and has attracted widespread attention. The existing technology path for photonic computing chips is as follows: Photonic computing is achieved using Mach-Zehnder interferometer (MZI) or micro-ring resonator (MMR). But there will be the following shortcomings: first, a single computing unit (MZI structure) is about 200-300 μm in size, and in order to achieve the change of the π phase, it needs to be hundreds of micrometers in length, which results in a large computing unit size and low integration. Second, the modulation method mainly uses the thermo-optical tuning principle or electro-optical tuning principle based on silicon-based optoelectronic technology, and the modulation speed is slow; third, this method exhibits temperature drift during modulation (particularly noticeable in MMR structures), which can affect the refractive index of the optical waveguide.

On the other hand, the demand for ultra-fast data processing requires increasingly higher computing power and speed of computer systems. As Moore's Law approaches its physical limit, electronic chips encounter great challenges in terms of computing speed and power consumption. Traditional matrix manipulations, such as those disclosed in Chinese patent CN111158636A, require the computer to store and retrieve intermediate data multiple times. As the size of the matrix increases, the computation time also increases exponentially. People have begun to seek a computational method that can efficiently achieve large-scale matrix manipulations.

The photonic computing structure has the characteristics of high speed and parallelism, and has outstanding advantages in processing linear computations, so it has become a hot spot in international research. People use new optical materials such as optical waveguide micro/nano structures and microlens arrays to build photonic computing chips and apply them to different scenarios.

Photonic computing chips, which use optical devices as basic units to build a network of photonic devices, can utilize high-speed parallel and low-power photons as information carriers. This is considered the most promising solution for high-speed, ultra-large-scale, large-data-volume, artificial intelligence computing and neuromorphic computing in the future, and is expected to drive a new round of industrial revolution. Silicon-based optoelectronic technology takes advantage of the unique advantages of photons in speed, bandwidth, and anti-interference, and has an integrated process compatible with CMOS process, which can break through the development dilemma of integrated circuits and further enhance the computing power of chips. Different from the binary electronic computing system composed of 0 and 1, photons have more controllable modulation and multiplexing dimensions, such as phase, wavelength, polarization, and mode, etc., and have unique advantages in analog computing and multi-bit computing. At the same time, they are very suitable for a large number of parallel computing and are one of the important directions for the development of integrated circuits in the post-Moore era.

The existing technology path for photonic computing chips is as follows: Photonic computing can be achieved using Mach-Zehnder interferometer (MZI) or micro-ring resonator (MMR), as disclosed in Chinese patents CN115905792A and CN113392965A. Computing arrays based on these methods are disclosed in Chinese patents CN10407644A and CN116107037A. However, these technologies generally have the following shortcomings:

1. Computing array size limit: The basic computing unit area of the photonic computing chip based on MZI is large. When tape-out on silicon photonics platforms, it is difficult for the photomask under the conventional wafer area to achieve the scale of the computing array at the application level.

2. Slow calculation speed: This is mainly because the thermo-optical tuning principle based on silicon-based optoelectronic technology is used, and there is a temperature drift phenomenon (especially significant in MMR structures), which affects the refractive index of the optical waveguide.

3. Design & packaging difficulty: Each basic computing unit of a photonic computing chip based on MZI has more than 10 electrodes, resulting in a huge number of wiring connections and high design and packaging complexity.

**SUMMARY**

The present invention provides a method for performing operations in the optical domain by means of a photonic computing unit, as well as a photonic computing array, an optoelectronic hybrid computing method and its array, which are capable of partially solving or alleviating the aforementioned problems so as to meet the application requirements of photonic computing for high speed, low energy consumption and high integration.

To solve the above technical problems, the present invention adopts the following technical solutions:

The first aspect of the present invention is to provide a method for performing a computation in an optical domain using a photonic computing unit, wherein the photonic computing unit comprises a first optical waveguide and an electro-optic modulator based on an optical absorption effect, wherein the electro-optic modulator utilizes an electrical signal as an external excitation to change a concentration of a free carrier by injecting a current or applying a voltage in a doped region of the electro-optic modulator, thereby changing an absorption coefficient $\alpha$ of an optical waveguide containing the free carrier for light; when an optical signal propagated by the first optical waveguide passes through the optical waveguide containing the free carrier, the free carrier absorbs the optical signal; the method comprises the following steps:

S101. Encoding a multiplier value into a write signal; S102. Mapping the multiplier value to a state of an electro-optic modulator by using the write signal, the state is represented by an absorption coefficient $\alpha$ of an optical waveguide for light under different concentrations of a free carrier; S103. Encoding a multiplicand value into an input signal; S104. Generating the intensity of the output signal when the input signal passes through the doped region of the electro-optic modulator via the first optical waveguide, wherein a product of the multiplier value and the multiplicand value is encoded into the intensity of the output signal.

In some embodiments, wherein the size of the photonic computing unit is less than 100 $\mu$m.

In some embodiments, wherein the absorption coefficient $\alpha$ of the optical waveguide for light under different concentrations of the free carrier exhibits at least two distinct values by using the write signal.

In some embodiments, wherein the electric signal has a voltage amplitude less than 10 V, and a duration less than 100 $\mu$s.

In some embodiments, wherein the electro-optic modulator based on the optical absorption effect comprises the doped region based on semiconductor doping technology and a pair of contact electrodes that form either an ohmic contact or a Schottky contact with the doped region.

In some embodiments, wherein the first optical waveguide and the electro-optic modulator are arranged in either a coplanar or a non-coplanar configuration.

In some embodiments, wherein the moving direction of free carriers in the doped region of the electro-optic modulator by an electric field is along the direction of the first optical waveguide or perpendicular to the direction of the first optical waveguide, and the doped region is on the same side or both sides of the first optical waveguide.

In some embodiments, wherein the photonic computing unit further comprises an optical device for performing an addition operation and a second optical waveguide, wherein the optical device for performing the addition operation is referred to as an optical adder device, and following step S104, the method further comprises the following steps:

S201. Encoding an addend value into the input signal of the second optical waveguide; S202. Generating the intensity of the output signal through coupling the output signal of the first optical waveguide and the input signal of the second optical waveguide by the optical adder device, wherein a sum of the product and the addend value is encoded into the intensity of the output signal of the optical adder device.

The second aspect of the present invention is to provide a photonic computing array for on-chip large-scale matrix multiplication operation, wherein the photonic computing array comprises

a photonic computing unit based on an optical absorption effect of a carrier; the photonic computing unit comprises a first optical waveguide and an electro-optic modulator based on an optical absorption effect positioned on the first optical waveguide; wherein the electro-optic modulator utilizes an electrical signal as an external excitation to change a concentration of a free carrier (charge or hole) by injecting a current or applying a voltage in a doped region of the electro-optic modulator, thereby changing an absorption coefficient $\alpha$ of an optical waveguide containing the free carrier for light, so that an optical signal passing through the first optical waveguide is absorbed by the free carrier to achieve a multiplication operation;
a crossbar switch matrix architecture (Crossbar); the crossbar switch matrix architecture is formed by a set of mutually parallel input row waveguides and a set of mutually parallel output column waveguides crossing each other;
the photonic computing unit for multiplication operation is provided at each intersection of the input row waveguide and the output column waveguide in the photonic computing array, the first optical waveguide of the photonic computing units is coupled to an adjacent waveguide via a waveguide coupler device, wherein the waveguide coupler device evanescently couples a portion of optical power from an adjacent input row waveguide, the coupled optical power depends on the length of the part of the waveguide coupling device that is placed as the adjacent input row waveguides and extends parallel to the adjacent input row waveguides;

In some embodiments, wherein the intersection of the input row waveguide and the output column waveguide that crosses it, a crossing optical waveguide is provided.

In some embodiments, wherein the input row waveguide is perpendicular to the output column waveguide.

In some embodiments, wherein the wavelength of light in the input optical signal of the input row waveguide in a different row is different.

In some embodiments, wherein the waveguide coupler device is operable to distribute optical power of the input optical signal evenly to each photonic computing unit in the same row.

In some embodiments, wherein the number of rows of input row waveguides of the photonic computing array is greater than or equal to 2, and the number of columns of output column waveguides of the photonic computing array is greater than or equal to 2.

In some embodiments, wherein the size of the photonic computing unit is less than 100 $\mu$m.

In some embodiments, wherein the electric signal as the external excitation has a voltage amplitude less than 10 V, and a duration less than 100 $\mu$s.

In some embodiments, wherein the first optical waveguide and the electro-optic modulator are arranged in either a coplanar or a non-coplanar configuration.

In some embodiments, wherein an input end of the input row waveguide of the photonic computing array is connected to a multiplexer (MUX), and an output end of the output column waveguide is connected to a demultiplexer (DEMUX).

The third aspect of the present invention is to provide an optoelectronic hybrid computing array for on-chip large-scale matrix multiplication operation, wherein the optoelectronic hybrid computing array comprises a set of photonic computing units with each comprising a first optical waveguide and a modulation element optically coupled to the first optical waveguide, wherein the modulation element modifies the transmission, reflection, refraction, or absorption characteristics of the first optical waveguide according to a state of the modulation element, and the state of the modulation element is adjustable by a write signal; the state is represented by an absorption coefficient $\alpha$ or a refractive index n of an optical waveguide for light; an optical input signal passes through the photonic computing unit to generate an optical output signal, wherein a product of a multiplier value and a multiplicand value is encoded into the optical output signal;

a set of photoelectric conversion devices with each matched and connected one-to-one with an output side of the first optical waveguide of the photonic computing unit, for converting the optical output signal into an electrical current signal, wherein a magnitude of the electrical current signal is proportional to a power of the optical output signal;
a crossbar switch matrix architecture; the crossbar switch matrix architecture is formed by a set of mutually parallel input optical waveguides and a set of mutually parallel electrical buses crossing each other; the optical input signal is transmitted through the input optical waveguide;
in the crossbar switch matrix architecture, one of the photonic computing units is provided at each intersection of the input optical waveguide and the electrical bus, an input side of the first optical waveguide of each of the photonic computing units is coupled to an adjacent input optical waveguide via a waveguide coupler device, wherein the waveguide coupler device evanescently couples a portion of optical power from the adjacent input optical waveguide, the coupled optical power depends on the length of the part of the waveguide coupling device that is placed as adjacent input optical waveguides and extends parallel to the adjacent input optical waveguides;
a plurality of parallel-connected optoelectronic conversion devices is connected to each of the electrical buses, the electrical bus sums a corresponding number of current signals converted by the plurality of parallel-connected optoelectronic conversion devices, generating an electrical output signal, and the sum obtained by performing an addition operation on the current signals is encoded into the electrical output signal.

In some embodiments, wherein the input optical waveguide and the electrical bus are perpendicular to each other.

In some embodiments, wherein the wavelength of light in the optical input signal of the input optical waveguide in a different row may be different or the same.

In some embodiments, wherein the waveguide coupler device is operable to distribute optical power of the input optical signal evenly to each of the photonic computing units in the same row.

In some embodiments, wherein the number of columns of the input optical waveguides is greater than or equal to 2; and the number of columns of the electrical buses is greater than or equal to 2.

In some embodiments, wherein the electrical bus is a metal interconnect layer on a photonic computing chip.

The fourth aspect of the present invention is to provide an optoelectronic hybrid computing method for on-chip large-scale matrix multiplication operation, wherein the optoelectronic hybrid computing method comprises the following steps:S1. Providing an optoelectronic hybrid computing unit, wherein the optoelectronic hybrid computing unit comprises a photonic computing unit and an optoelectronic conversion device that are interconnected; the photonic computing unit generates an optical output signal carrying encoded information; the optoelectronic conversion device converts the optical output signal into a current signal, and a magnitude of the current signal is proportional to a power of the optical output signal; S2. Providing an electrical bus, wherein the electrical bus sums a corresponding number of current signals converted by a plurality of parallel-connected optoelectronic conversion devices, generating an electrical output signal, and the sum obtained by performing an addition operation on the current signals is encoded into the electrical output signal.

In some embodiments, wherein in step S1, "the photonic computing unit generates an optical output signal carrying encoded information" specifically comprises: S11. Providing a write signal, wherein a multiplier value is encoded into the write signal; S12. Using the write signal to map the multiplier value to a state of the photonic computing unit, the photonic computing unit comprises a first optical waveguide and a modulation element optically coupled to the first optical waveguide, wherein the modulation element modifies the transmission, reflection, refraction, or absorption characteristics of the first optical waveguide according to a state of the modulation element, and the state of the modulation element is adjustable by a write signal; the state is represented by an absorption coefficient $\alpha$ or a refractive index n of an optical waveguide for light;S13. Encoding a multiplicand value into an optical input signal of the photonic computing unit; the optical input signal passes through the photonic computing unit to generate the optical output signal, wherein a product of the multiplier value and the multiplicand value is encoded into the optical output signal.

In some embodiments, wherein the modulation element is an electro-optic modulator based on a light absorption effect, the electro-optic modulator utilizes an electrical signal as an external excitation to change a concentration of a free carrier by injecting a current or applying a voltage in a doped region of the electro-optic modulator, thereby changing the absorption coefficient $\alpha$ of an optical waveguide containing the free carrier for light, so that the optical signal passing through the first optical waveguide achieves a multiplication operation.

In some embodiments, wherein the modulation element is a phase-change material deposited on the first optical waveguide, the phase-change material is operable to optionally alter its own state in response to an optical signal as an external excitation, and the own state is manifested by modifying the absorption coefficient $\alpha$ of an optical waveguide comprising the phase-change material for light.

In some embodiments, wherein in step S1, "the photonic computing unit generates an optical output signal carrying encoded information" is implemented using a Mach-Zehnder interferometer (MZI) or a micro-ring resonator (MMR).

In some embodiments, wherein the electrical bus is a metal interconnect layer on a photonic computing chip.

Advantageous technical effects: The present invention provides a method for performing a computation in an optical domain using a photonic computing unit. The method involves configuring an electro-optic modulator based on an optical absorption effect to use an electrical signal as an external excitation to change a concentration of a free carrier by injecting a current or applying a voltage in a doped region of the electro-optic modulator, thereby changing an absorption coefficient $\alpha$ of an optical waveguide containing the free carrier for light. When an optical signal propagating in the optical waveguide passes through the optical waveguide containing a free carrier, it will be absorbed by the free carrier, thus enabling photonic computation based on the optical absorption effect. The size of each photonic computing unit can be reduced to 20 $\mu$m-30 $\mu$m, resulting in higher integration and faster modulation speed, less than 10 ns. The electro-optic modulator based on the light absorption effect can operate continuously for more than 100,000 hours, with a longer lifespan.

The novel photonic computing array for on-chip large-scale matrix multiplication operation provided by the present invention is a novel photonic computing chip technology path, and the basic computing unit area thereof is small, and the photomask under the conventional wafer area can achieve the application level of the computing array scale; the modulation speed is fast, and the modulation speed can be increased to the nanosecond level through electrical pulses, thereby improving the computing performance of the photonic computing chip without causing temperature drift; each basic computing unit has only 2 electrodes, resulting in a small number of wiring connections and low design difficulty and packaging complexity.

In the photoelectric hybrid computing array provided by the present invention, (1) the area of the basic computing unit is small, and the photomask under the conventional wafer area can achieve the application level of the computing array scale; the modulation speed is fast, and the modulation speed can be increased to the nanosecond level through electrical pulses, thereby improving the computing performance of the photonic computing chip without causing temperature drift; each basic computing unit has only 2 electrodes, resulting in a small number of wiring connections and low design difficulty and packaging complexity; (2) The photoelectric conversion device and the electrical bus are used to sum the product of the optical output signals of the photonic computing units on different rows. First, the input power requirement of the light source is lower, and second, the wavelength requirement of the input light on different rows is also reduced. Therefore, the photoelectric hybrid computing array of the present invention reduces the requirements of the light source to a certain extent and can achieve the integrated application of the light source and the photonic computing chip more quickly.

## DESCRIPTION OF DRAWINGS

In order to more clearly explain the technical solutions in the embodiments of the present invention or the prior art, the drawings that need to be used in the description of the embodiments or the prior art will be briefly introduced below. Throughout the drawings, similar components or parts are generally identified by like reference numerals. In the drawings, components or portions are not necessarily drawn to actual scale. It will be apparent that the drawings described below are some embodiments of the present invention, and other drawings can be obtained from those of ordinary skill in the art without expending creative labor.

FIG. 1 is a schematic diagram of the overall flow of a method for performing a computation in an optical domain by a photonic computing unit according to an exemplary embodiment of the present invention.

FIG. 2 is a schematic diagram of a photonic computing unit structure based on a light absorption effect provided in an exemplary embodiment of the present invention.

FIG. 3 is a schematic diagram of a working principle of a photonic computing unit based on a light absorption effect provided in an exemplary embodiment of the present invention.

FIG. 4 is a schematic diagram of a structure of a photonic computing unit for multiplication and addition operations provided in an exemplary embodiment of the present invention.

FIG. 5 is a schematic diagram of a working principle of a photonic computing unit for multiplication and addition operations provided in an exemplary embodiment of the present invention.

FIG. 6 is a schematic diagram of a multi-mode interferometer-based ultra-large-scale optoelectronic hybrid computing array according to an exemplary embodiment of the present invention.

FIG. 7 is a schematic diagram of a $3 \times 8$ optoelectronic hybrid computing array according to an exemplary embodiment of the present invention.

FIG. 8 is an exemplary example of a hybrid optoelectronic computing unit not being $2^m$ units according to an exemplary embodiment of the present invention.

FIG. 9 is another exemplary example of a hybrid optoelectronic computing unit not being $2^m$ units according to an exemplary embodiment of the present invention.

FIG. 10 is a schematic diagram of the flow of an optoelectronic hybrid computing method according to an exemplary embodiment of the present invention.

FIG. 11 is a schematic diagram of an optoelectronic hybrid computing array according to an exemplary embodiment of the present invention.

FIG. 12 is a schematic diagram of a 3 * 3 optoelectronic hybrid computing array according to an exemplary embodiment of the present invention.

FIG. 13 is a schematic diagram of an optoelectronic hybrid computing array according to another exemplary embodiment of the present invention.

FIG. 14 is a schematic diagram of an optoelectronic hybrid computing array according to yet another exemplary embodiment of the present invention.

Reference numerals: 1 photonic computing unit, 11 first optical waveguide, 12 electro-optic modulator, 103a first contact electrode, 103b second contact electrode, 104a first electrical interconnection device, 104b second electrical interconnection device, 105 electrical signal generator, 106 input signal, 107 output signal, 108 write signal, 109 optical adder device, 110 second optical waveguide, 111 optical absorption waveguide, 112 input signal of second optical waveguide, 113 intensity of output signal of optical adder device; row waveguide coupler device 21, column waveguide coupler device 22; input row waveguide 31, output column waveguide 32, electrical bus 33; crossing optical waveguide 4; optoelectronic conversion device 5;

101-1, 101-2, 101-m, 101a, 101b, and 101c are input row waveguides in the array; 102-1, 102-2, 102-n, 101-1', 101-1', 102-2', 102-3', 102-2', 102-n', 102a, 102b, and 102c are output column waveguides in the array; $U_{11}$, $U_{12}$, $U_{13}$, $U_{21}$, $U_{22}$, $U_{23}$, $U_{31}$, $U_{32}$, $U_{33}$, $U_{m1}$, $U_{m2}$, $U_{mn}$, $U_{2n}$, and $U_{1n}$ are photonic computing units in the array; $P_1$, $P_2$, $P_3$, $P_m$, and $\lambda_1$-$\lambda_n$ are input codes; $A_1$, $A_2$, $A_3$, $A_m$, and $\lambda_1'$-$\lambda_n'$ are output signals; $r_{11}$, $r_{12}$, $r_{13}$, $r_{21}$, $r_{22}$, $r_{23}$, $r_{31}$, $r_{32}$, $r_{33}$, $r_{m1}$, $r_{m2}$, $r_{mn}$, $r_{2n}$, and $r_{1n}$ are beam splitting ratios of row waveguide coupler devices;

$c_{11}$, $c_{12}$, $c_{13}$, $c_{21}$, $c_{22}$, $c_{23}$, $c_{31}$, $c_{32}$, $c_{33}$, $c_{m1}$, $c_{m2}$, $c_{mn}$, $c_{1n}$, and $c_{2n}$ are beam splitting ratios of column waveguide coupler devices; $d_{11}$, $d_{12}$, $d_{13}$, $d_{21}$, $d_{22}$, $d_{23}$, $d_{31}$, $d_{32}$, $d_{33}$, $d_{m1}$, $d_{m2}$, $d_{mn}$, $d_{1n}$, $d_{2n}$, and $\beta$ are the responsivities of an optoelectronic conversion device in converting an optical signal into an electrical current.

## DETAILED DESCRIPTION OF EMBODIMENTS

In order to make the objectives, technical solutions, and advantages of the examples of the present invention clearer, the technical solutions in the examples of the present invention will be clearly and completely described below with reference to the drawings in the examples of the present invention. It is obvious that the examples described are part of the examples of the present invention, but not all of them. Based on the examples of the present invention, all other examples that would have been obtained by those of ordinary skill in the art without involving any inventive effort shall fall within the scope of protection of the present invention.

As used herein, use of suffixes such as "module", "part", or "unit" used to refer to components is merely for facilitating description of the present invention, but has no specific meaning by itself. Therefore, the terms "module", "part", or "unit" may be used interchangeably. As used herein, the terms "upper", "lower", "inner", "outer", "front", "back", "one end", "the other end", etc., indicating positions or location relationships, are based on the positions or location relationships shown in the accompanying drawings and are merely for the purpose of facilitating and simplifying the description of the present invention. They do not indicate or imply that the devices or components referred to must have a specific position, be constructed or operate in a specific position, and therefore should not be construed as limiting the present invention. Furthermore, the terms "first" and "second" are for descriptive purposes only and are not to be understood as indicating or implying relative importance. As used herein, unless otherwise explicitly specified and defined, the terms "mounted", "provided with", "connected", etc. are to be understood in a broad sense, for example, "connected" can be a fixed connection, a detachable connection, or an integral connection; and it can be a mechanical connection, a direct connection, an indirect connection through an intermediate medium, or an internal connection between two elements. The specific meanings of the above terms in the present invention will be understood by those skilled in the art. As used herein, "and/or" includes any and all combinations of one or more of the relevant listed items. As used herein, "a plurality" means two or more, that is, it includes two, three, four, five, and the like.

As used herein, "light" refers to electromagnetic radiation or electromagnetic waves with wavelengths in the ultraviolet (UV) to infrared (IR) range (e.g., between 10 nm and 100 $\mu$m), which can propagate in free space and be guided by waveguides.

As used herein, an "optical waveguide" refers to any structure for confining light within its surface or a region adjacent to its surface in one or more dimensions, thereby guiding light in a direction of propagation parallel to its axis. A waveguide is formed from a series of layers/regions having different refractive indices, typically including an inner layer/region or a core layer/region. The inner layer/region or core layer/region is made of a material having a higher refractive index than the surrounding (outer) layer/region or cladding layer/region. In this case, the waveguide confines light in two dimensions, e.g., within the channel, in the thickness/growth direction, and in the lateral/width direction perpendicular to the thickness/growth direction. The core layer/region and/or the cladding layer/region may be referred to as a guide layer that actively confines and guides light.

As used herein, "modulator" refers to any entity that has an effect on the characteristics of light. Among them, the characteristics of light include transmission, refraction, absorption, etc. In some embodiments, the light modulator includes a phase-change material layer made of a phase-change material, or may be made of a phase-change material.

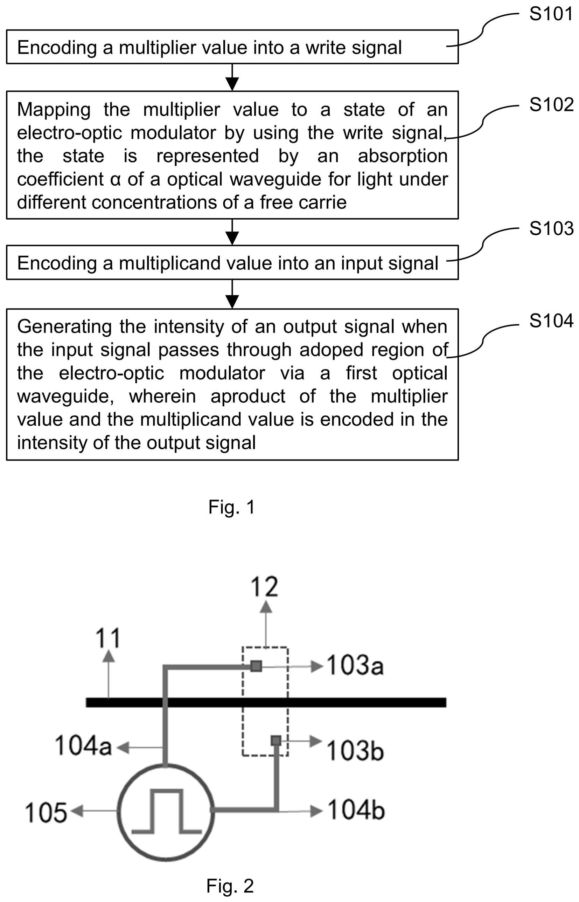

**Example 1:** Referring to FIG. 1, an exemplary embodiment of the present invention provides a method of performing a multiplication operation in an optical domain by a photonic computing unit, wherein the photonic computing unit includes a first optical waveguide 11 and an electro-optic modulator 12 based on an optical absorption effect, see FIG. 2.

In some embodiments, the electro-optic modulator 12 utilizes an electrical signal as an external excitation to change a concentration of a free carrier by injecting a current or applying a voltage in a doped region of the electro-optic modulator, thereby changing an absorption coefficient $\alpha$ of an optical waveguide containing the free carrier for light. When an optical signal propagated by the first optical waveguide 11 passes through the optical waveguide containing the free carrier, the free carrier absorbs the optical signal.

In some embodiments, implementation of the method specifically comprises the following steps: S101. Encoding a multiplier value into a write signal 108. S102. Mapping the multiplier value to a state of an electro-optic modulator 12 by using the write signal 108, the state is represented by an absorption coefficient $\alpha$ of a light waveguide for light under different concentrations of a free carrier. S103. Encoding a multiplicand value into an input signal 106. S104. Generating the intensity of the output signal 107 when the input signal 106 passes through a doped region of the electro-optic modulator 12 via the first optical waveguide 11, wherein a product of the multiplier value and the multiplicand value is encoded in the intensity of the output signal 107.

In some embodiments, the write signal 108 for changing the free carrier concentration in the electro-optic modulator 12 is provided by an electrical signal generator 105, and the first electrical interconnection device 104a and the second electrical interconnection device 104b in the metal layer of the electrical signal generator 105 transmit the generated electrical signal to the doped region of the electro-optic modulator 12 through the first contact electrode 103a and the second contact electrode 103b. The electrical signal causes free carriers to undergo directed motion by an electric field, and the parameter change of the electrical signal can change the free carrier concentration in the doped region, thus changing the absorption coefficient of the optical waveguide containing the free carrier for light. The electro-optic modulator 12 based on the optical absorption effect comprises a doped region based on semiconductor doping technology, such as ion implantation or high temperature diffusion, and a pair of contact electrodes that form either an ohmic contact or a Schottky contact with the doped region.

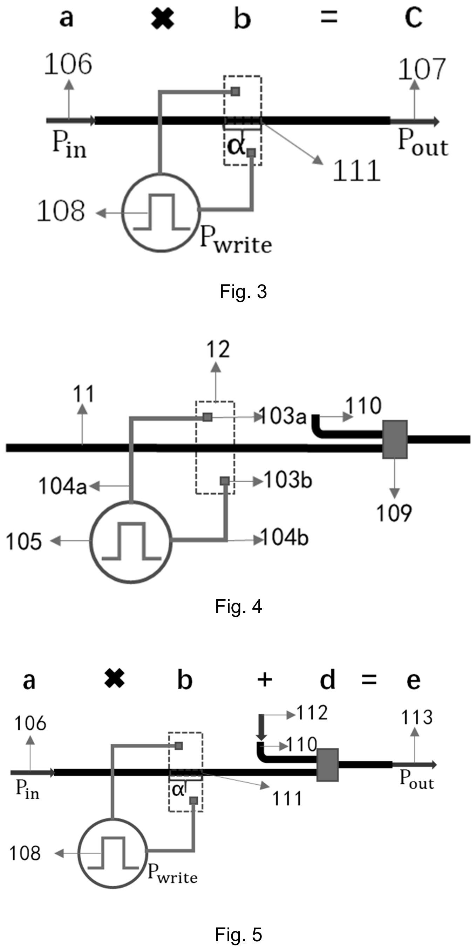

Referring to FIG. 3, the electrical signal generator 105 maps the number b to the absorption coefficient $\alpha$ of the optical waveguide containing the free carrier for light using an external electrical signal, i.e. the write signal 108, and the electro-optic modulator 12 injects a current or applies a voltage to change the free carrier concentration (charge or hole) in the doped region to change the absorption coefficient $\alpha$ of the optical waveguide containing the free carrier for light. The energy Pwrite of the external electrical signal has a mapping relationship with the optical absorption coefficient in the form of an elementary function or a rational function, the input signal 106 is attenuated inversely proportionally to the absorption coefficient $\alpha$ of the optical waveguide containing the free carrier for light, thereby generating the output signal 107, which corresponds to the multiplication of the external electrical signals - the write signal 108 and the input signal 106. The output signal Pout=Pwrite×Pin of the first optical waveguide 11 is the result of mapping the multiplier b to $\alpha$ and the multiplicand a to Pin.

Exemplarily, the size of the photonic computing unit is less than 100 $\mu$m, and preferably, the size of the photonic computing unitis 20 $\mu$m to 30 $\mu$m. At present, the size of the photonic computing unit based on the MZI structure is 200 $\mu$m to 300 $\mu$m, but the size of the photonic computing unit provided in this example is obviously smaller than the former, thus achieves the miniaturization of the photonic computing unit and enables it to have a higher integration level. As the size of a single photonic computing unit decreases, the actual area of each device on the chip decreases. When tape-out on a silicon photonics platform, optical masks with a conventional wafer area (e.g., 8-inch wafer) can support a larger number of photonic computing units, forming a larger-scale matrix of photonic computing arrays and improving the integration of photonic computing chips.

It can be understood that the absorption coefficient $\alpha$ of the optical waveguide for light under different concentrations of the free carrier exhibits at least two distinct values by the write signal.

In some embodiments, the electric signal has a voltage amplitude less than 10 V and a duration less than 100 $\mu$s. In some preferred embodiments, the electric signal has a voltage amplitude less than 5 V and a duration less than 100 ns. At present, the modulation speed of the MZI photonic computing unit based on thermo-optic modulation is in the order of microseconds, and the electro-optic modulator provided in this example can achieve a modulation speed of less than 100 ns or even less than 10 ns by using a doped semiconductor device, which greatly improves the calculation speed of the photonic computing unit. The amplitude of the electrical signal is preferably less than 5 V, so that it can be well compatible with the existing electrical chip level, and no additional circuit design is required, and the optical signal in the photonic computing unit can be modulated directly by emitting pulses from the electrical chip.

For the first optical waveguide 11, its material may be silicon, silicon nitride, indium phosphide, lithium niobate, gallium nitride, gallium arsenide, aluminum nitride, magnesium oxide, or diamond (polycrystalline or single crystalline).

For the electro-optic modulator based on the light absorption effect, the doped region thereof may be one of a PIN junction, a PN junction, a P-type doped device, and an N-type doped device.

Optionally, the doped region in the electro-optic modulator 12 may be along the direction of the first optical waveguide 11 or perpendicular to the direction of the first optical waveguide 11, and the doped region is positioned on the same side of the waveguide or on both sides of the waveguide.

**Example 2:** Referring to FIGs. 4 and 5, in another embodiment of the present invention, there is provided a method of performing a multiplication-addition operation in an optical domain by a photonic computing unit, wherein the photonic computing unit includes a first optical waveguide 11, an electro-optic modulator 12 based on an optical absorption effect, an optical device for implementing an addition operation, and a second optical waveguide 110.

The electro-optic modulator 12 utilizes an electrical signal as an external excitation to change a concentration of a free carrier by injecting a current or applying a voltage in a doped region of the electro-optic modulator, thereby changing an absorption coefficient $\alpha$ of an optical waveguide containing the free carrier for light. When an optical signal propagated by the first optical waveguide 11 passes through the optical waveguide containing the free carrier, the free carrier absorbs the optical signal. The optical device for implementing the addition operation is referred to as an optical adder device 109. The method of performing multiplication and addition operations in the optical domain by the photonic computing unit specifically comprises the following steps: S101. Encoding a multiplier value into a write signal 108. S102. Mapping the multiplier value to a state of an electro-optic modulator 12 by using the write signal 108, the state is represented by an absorption coefficient $\alpha$ of a light waveguide for light under different concentrations of a free carrier. S103. Encoding a multiplicand value into an input signal 106. S104. Generating the intensity of the output signal when the input signal 106 passes through an optical absorbing waveguide 111 of the electro-optic modulator 12 via the first optical waveguide 11, wherein a product of the multiplier value and the multiplicand value is encoded into the intensity of the output signal. S201. Encoding an addend value into the input signal 112 of the second optical waveguide 110. S202. Generating the intensity of the output signal through coupling an output signal of the first optical waveguide 11 and the input signal of the second optical waveguide 110 by the optical adder device 109, wherein a sum of the product and the addend value is encoded into the intensity of the output signal 113 of the optical adder device 109.

The optical adder device 109 may be one of a directional coupler, a multi-mode interferometer, and an optical beam combiner, and those skilled in the art may adopt other optical devices capable of achieving the same function according to actual needs, which is not specifically limited in this example.

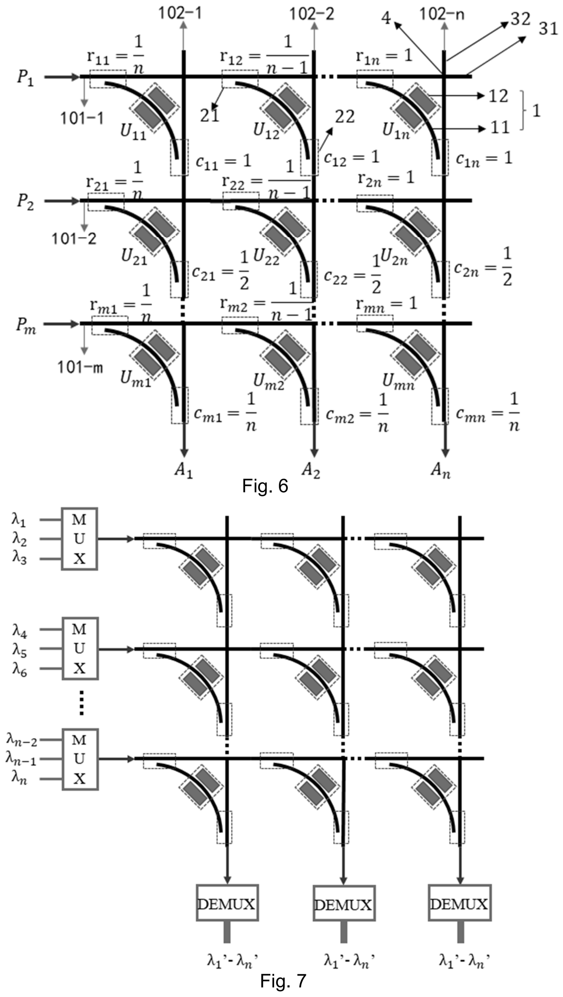

**Example 3:** As shown in FIG. 6, the present invention discloses a photonic computing array for on-chip large-scale matrix multiplication operation, including a photonic computing unit 1 based on a carrier light absorption effect, a waveguide coupler device, and a crossbar switch matrix architecture (Crossbar). Specifically, the crossbar switch matrix architecture is formed by a set of mutually parallel input row waveguides 31 and a set of mutually parallel output column waveguides 32 crossing each other. Preferably, the input row waveguide 31 is perpendicular to the output column waveguide 32.

In the present invention, the number of rows of input row waveguides of the photonic computing array is greater than or equal to 2, and the number of columns of output column waveguides of the photonic computing array is greater than or equal to 2. Preferably, a crossing optical waveguide 4 is disposed at each intersection between an input row waveguide 31 and an output column waveguide 32 that is arranged to cross the input row waveguide, thereby enabling low-loss transmission of the optical signal at the waveguide crossing

The photonic computing unit 1 for multiplication operation is provided at each intersection of the input row waveguide 31 and the output column waveguide 32 in the photonic computing array. The photonic computing unit 1 comprises a first optical waveguide 11 and an electro-optic modulator 12 based on the optical absorption effect positioned on the first optical waveguide 11. The electro-optic modulator 12 utilizes an electrical signal as an external excitation to change a concentration of a free carrier (a charge or a hole) by injecting a current or applying a voltage in a doped region of the electro-optic modulator, thereby changing an absorption coefficient $\alpha$ of an optical waveguide 11 containing the free carrier for optical signal, so that the optical signal passing through the first optical waveguide 11 is absorbed by the free carrier to achieve a multiplication operation. Among them, the injected current or applied voltage is mainly in the form of electrical pulses, and the duration of the electrical pulses is at the nanosecond level. At the same time, the duration of the electrical pulses determines the modulation speed of the photonic computing array, and then determines the computing performance of the photonic computing array; at the same time, no temperature drift will occur.

The photonic computing array of the present invention performs the multiplication operation as shown in FIGs. 1 to 3, which will not be described in detail here. The write signal 108 for changing the free carrier concentration in the electro-optic modulator 12 is provided by an electrical signal generator 105. The two electrical interconnection devices 104a and 104b in the metal layer of the electrical signal generator 105 transmit the generated electrical signal to the doped region of the electro-optic modulator 12 via the first contact electrode 103a and the second contact electrode 103b, respectively. The electrical signal causes the free carrier to move directionally by the electric field, and the parameter change of the electrical signal can change the free carrier concentration in the doped region, thus changing the absorption coefficient of the optical waveguide containing the free carrier for light. The electro-optic modulator based on the optical absorption effect comprises a doped region based on semiconductor doping technology, such as ion implantation or high temperature diffusion, and a pair of contact electrodes that form either an ohmic contact or a Schottky contact with the doped region.

The electrical signal generator 105 maps the multiplier value b to the absorption coefficient $\alpha$ of the optical waveguide containing the free carrier for light using an external electrical signal, i.e. the write signal 108, and the electro-optic modulator 12 injects a current or applies a voltage to change the free carrier concentration (charge or hole) in the doped region to change the absorption coefficient $\alpha$ of the optical waveguide containing the free carrier for light. The energy Pwrite of the external electrical signal has a mapping relationship with the optical absorption coefficient in the form of an elementary function or a rational function, the input optical signal 106 is attenuated inversely proportionally to the absorption coefficient $\alpha$ of the optical waveguide containing the free carrier for light, thereby generating the output signal 107, which corresponds to the multiplication of the external electrical signals - the write signal 108 and the input optical signal 106. The output signal Pout=$\alpha\times$Pin of the first optical waveguide 11 is the result of mapping the multiplier b to $\alpha$ and the multiplicand a to Pin.

The size of the photonic computing unit 1 of the present invention is less than 100 $\mu$m, and preferably, the size of the photonic computing unit is 20 $\mu$m to 30 $\mu$m. At present, the size of the photonic computing unit based on the MZI structure is 200 $\mu$m to 300 $\mu$m, but the size of the photonic computing unit provided in this embodiment is obviously smaller than the former, thus achieving miniaturization and high integration of the photonic computing unit. As the size of a single photonic computing unit decreases, the actual area of each device on the chip decreases. When tape-out on a silicon photonics platform, an optical photomask with a conventional wafer area (e.g., 8-inch wafer) can support a larger number of photonic computing units, forming a larger-scale matrix of photonic computing arrays and thus improving the integration of photonic computing chips.

The existing photonic computing array based on MZI has a large size. When tape-out on a silicon photonics platform, a photomask of conventional wafer area (such as 8-inch wafers) cannot support photonic computing arrays with a matrix size of 128*128, and the matrix size of 128*128 represents a threshold for commercial applications. The novel photonic computing array proposed in the present invention for on-chip large-scale matrix multiplication operation can achieve a matrix size of 400*400 on a photomask of a conventional wafer area, which is far greater than the threshold for commercial application.

In this example, the electric signal has a voltage amplitude less than 10 V and a duration less than 100 $\mu$s. In some preferred embodiments, the electric signal has a voltage amplitude less than 5 V and a duration less than 100 ns. At present, the modulation speed of the MZI photonic computing unit based on thermo-optic modulation is in the order of microseconds, and the electro-optic modulator provided in this example can achieve a modulation speed of less than 100 ns or even less than 10 ns by using a doped semiconductor device, which greatly improves the calculation speed of the photonic computing unit. The amplitude of the electrical signal is preferably less than 5 V, so that it can be well compatible with the existing electrical chip level, and no additional circuit design is required, and the optical signal in the photonic computing unit can be modulated directly by emitting pulses from the electrical chip.

In the aspect of modulator, the photonic computing array based on MZI has more than 10 electrodes per computing unit, while the novel photonic computing array for on-chip large-scale matrix multiplication operation proposed by the present invention has only 2 electrodes per photonic computing unit, which is far less difficult than the photonic computing array based on MZI from the perspective of design and packaging.

In a preferred embodiment of the present invention, the first optical waveguide 11 of each of the photonic computing units 1 is coupled with an adjacent waveguide through the waveguide coupler device, for example: one end of the first optical waveguide 11 is coupled to an adjacent input row waveguide 31 through a row waveguide coupler device 21, and the other end is coupled to an adjacent output column waveguide 32 through a column waveguide coupler device 22. wherein the waveguide coupler device evanescently couples a portion of optical power from an adjacent input row waveguide 31, and the coupled optical power depends on the length of the part of the waveguide coupling device that is placed as the adjacent input row waveguides and extends parallel to the adjacent input row waveguides.

The feature of the present invention is that a waveguide coupler device and a crossbar matrix architecture are adopted to interconnect a single photonic computing unit for multiplication operation to form a crossbar matrix architecture (Crossbar) to achieve large-scale matrix multiplication operation. Namely, after each photonic computing unit is subjected to the above multiplication operation, the output signal with the product is summed on the output column waveguide 32 by the column waveguide coupler device 22. The addend value is encoded into the input signal of the output column waveguide. The waveguide coupler device ensures that the common factor of optical power is the same for each wavelength. The output signal of the input row waveguide is coupled with the input signal of the output column waveguide to generate an output signal. The sum of the product and the addend value is encoded in the optical power of the output signal of the output column waveguide. Of course, the order of the input row waveguide and the output column waveguide is not fixed. The optical signal can be input through the column waveguide for multiplication operation, and the result may be output after accumulation is performed via a row waveguide.

The present invention achieves low-loss transmission of optical signals between rows and columns of a large-scale matrix through a crossbar switch matrix architecture, and finally achieves a large-scale matrix multiplication operation. In a preferred embodiment, the wavelengths of the light of the input optical signals of the input row waveguides 31 of different rows are different, so as to avoid the interference phenomenon of light during the addition operation and affect the accuracy of photonic computing.

Specifically, as shown in FIG. 6, the present invention provides a method for performing a matrix multiplication operation in an optical domain, wherein the method achieves the calculation of an m $\times$ n order matrix P $\times$ Q = A:

$$\begin{pmatrix} P_1 \\ P_2 \\ \cdots \\ P_m \end{pmatrix}^T \begin{pmatrix} Q_{11} & Q_{12} & \cdots & Q_{1n} \\ Q_{21} & Q_{22} & \cdots & Q_{2n} \\ \cdots & \cdots & Q_{(m-1)(n-1)} & \cdots \\ Q_{1m} & Q_{2m} & \cdots & Q_{mn} \end{pmatrix} = \begin{pmatrix} A_1 \\ A_2 \\ \cdots \\ A_m \end{pmatrix}$$

The method specifically includes the following steps:

(1) Encoding the weight matrix Q (for example, the input code $Q_{11}$ in the photonic computing unit $U_{11}$ in the first row and first column, the input code $Q_{12}$ in the photonic computing unit $U_{12}$ in the first row and second column, the input code $Q_{21}$ in the photonic computing unit $U_{21}$ in the second row and first column, and so on) into a write signal.

(2) Mapping the multiplier value to a state of an electro-optic modulator in each photonic computing unit by using the write signal, the state is represented by an absorption coefficient $\alpha$ of an optical waveguide for light.

(3) Encoding an input data matrix P (for example, an input code $P_1$ in the input row waveguide of the first row, an input code $P_2$ in the input row waveguide of the second row, and so on) to an input optical signal having its optical power equally distributed to each unit on the same row by the row waveguide coupler device 21.

(4) Generating an output signal when the input optical signal passes through the optical absorption region of the electro-optic modulator of the photonic computing unit via the optical waveguide , wherein the product of the multiplier and the multiplicand is encoded in the output signal, the optical power of the output signal is summed on the column waveguide via the column waveguide coupler device 22, the column waveguide coupler device can ensure that the common factor of optical power is the same for each wavelength;

for example: the output optical power of the first column is:

$$r_{11}c_{11}(1-c_{21})..(1-c_{m1})P_1Q_{11} + r_{21}c_{21}(1-c_{31})..(1-c_{m1})P_2Q_{21} + \ldots\ldots + r_{m1}c_{m1}P_mQ_{m1} = A_1$$

$$\frac{1}{m*n}\left(P_1Q_{11} + P_2Q_{21} + \cdots\cdots + P_mQ_{m1}\right) = A_1$$ .

The common factor in the above formula is $1/m*n$; $r_{11}$, $r_{21}$, and $r_{m1}$ are the beam splitting ratios of the row waveguide coupler devices; $c_{11}$, $c_{21}$, $c_{31}$, and $c_{m1}$ are the beam splitting ratios of the column waveguide coupler devices, and so on.

FIG. 7 shows an extended application of the photonic computing array of the present invention. An input end of the input row waveguide 31 of the photonic computing array is connected to a multiplexer MUX, and an output end of the output column waveguide 32 is connected to a demultiplexer DEMUX. Each component of the input matrix uses multiple optical signals of different wavelengths, and the number of channels of the multiplexer determines a multiplication factor by which the computational capability of the photonic computing array is increased.

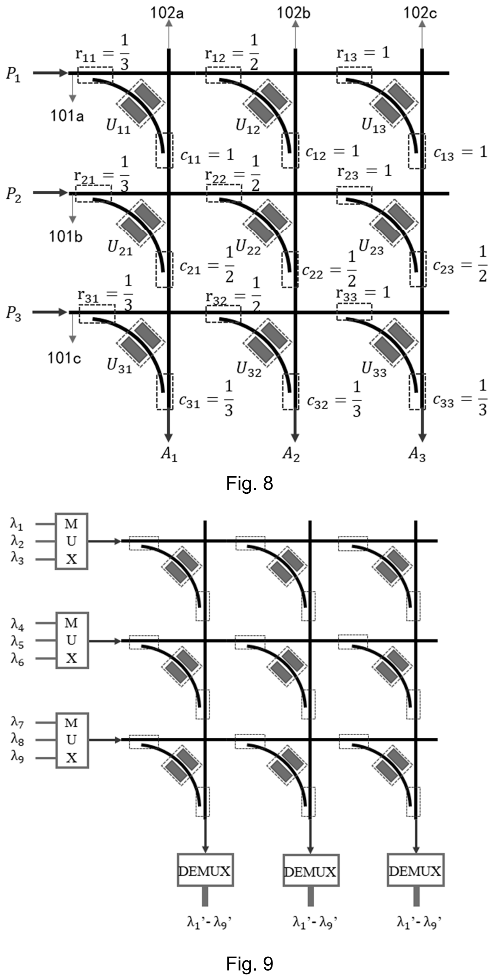

FIG. 8 illustrates a schematic diagram of a 3*3 photonic computing array in an embodiment, which calculates a third-order matrix P×Q=A:

$$\begin{pmatrix} P_1 \\ P_2 \\ P_3 \end{pmatrix}^T \begin{pmatrix} Q_{11} & Q_{12} & Q_{13} \\ Q_{21} & Q_{22} & Q_{23} \\ Q_{31} & Q_{32} & Q_{33} \end{pmatrix} = \begin{pmatrix} A_1 \\ A_2 \\ A_3 \end{pmatrix},$$

wherein: 101a, 101b, and 101c: input row waveguides; 102a, 102b, and 102c: output column waveguides; $P_1$, $P_2$, and $P_3$: input (read) optical signals; $A_1$, $A_2$, and $A_3$: output signals; $Q_{11}$, $Q_{12}$, $Q_{13}$, $Q_{21}$, $Q_{22}$, $Q_{23}$, $Q_{31}$, $Q_{32}$, and $Q_{33}$: input codes in the photonic computing units $U_{11}$, $U_{12}$, $U_{13}$, $U_{21}$, $U_{22}$, $U_{23}$, $U_{31}$, $U_{32}$, and $U_{33}$ used for multiplication operations, respectively; $r_{11}$, $r_{12}$, $r_{13}$, $r_{21}$, $r_{22}$, $r_{23}$, $r_{31}$, $r_{32}$, and $r_{33}$: beam splitting ratios of the row waveguide coupler devices; $c_{11}$, $c_{12}$, $c_{13}$, $c_{21}$, $c_{22}$, $c_{23}$, $c_{31}$, $c_{32}$, and $c_{33}$: beam splitting ratios of the column waveguide coupler devices.

According to the method of the invention, the optical power output of the first column can be calculated as follows:

$$r_{11}c_{11}(1-c_{21})(1-c_{31})Q_{11}P_1 + r_{21}c_{21}(1-c_{31})Q_{21}P_2 + r_{31}c_{31}Q_{31}P_3 = \frac{1}{9}(Q_{11}P_1 + Q_{21}P_2 + Q_{31}P_3) = A_1$$

,

the common factor in the above formula is 1/9.

Likewise, FIG. 9 shows an extended application of the photonic computing array of the embodiment of FIG. 8. By adding a multiplexer (MUX) at the input end of the photonic computing array and a demultiplexer (DEMUX) at the output end, and by using 3 different wavelengths for each component of the input matrix, the computing power of the photonic computing array is increased by 3 times.

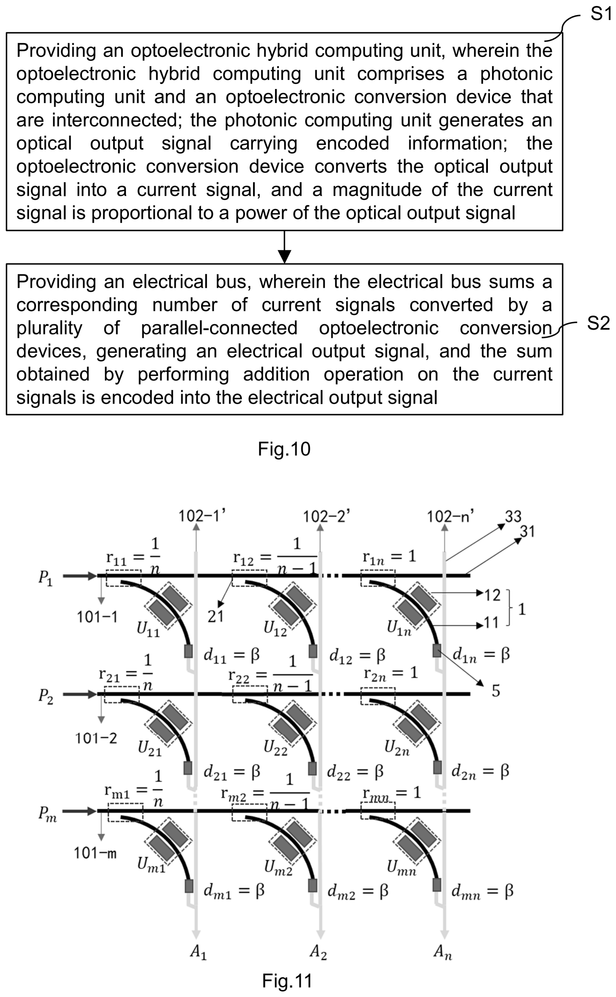

**Example 4:** The present invention provides an optoelectronic hybrid computing array for on-chip large-scale matrix multiplication operation, and the specific structure is as shown in the preferred embodiment of FIG. 11, including an optoelectronic hybrid computing unit, a row waveguide coupler device 21, an input optical waveguide 31, and an electrical bus 33. The photoelectric hybrid calculation unit includes a photonic computing unit 1 and a photoelectric conversion device 5.

The present invention uses the photonic computing unit 1 to perform a multiplication operation, and comprises a first optical waveguide 11 and a modulation element optically coupled to the optical waveguide, wherein the modulation element modifies the transmission, reflection, refraction, or absorption characteristics of the optical waveguide according to a state of the modulation element, and the state of the modulation element can be adjusted by a write signal; the state is represented by an absorption coefficient $\alpha$ or a refractive index n of the optical waveguide for light. The optical input signal passes through the photonic computing unit to generate an optical output signal, wherein a product of a multiplier value and a multiplicand value is encoded into the optical output signal.

In the present invention, the modulation element includes three forms.

In the preferred embodiment shown in FIG. 11, the modulation element is an electro-optic modulator 12 based on the optical absorption effect, and the electro-optic modulator 12 utilizes an electrical signal as an external excitation to change a concentration of a free carrier by injecting a current or applying a voltage in a doped region of the electro-optic modulator, thereby changing an absorption coefficient $\alpha$ of an optical waveguide containing the free carrier for light, so that the optical signal passing through the optical waveguide is absorbed by the free carrier to achieve a multiplication operation.

The specific multiplication operation process is shown in FIGs. 1 to 3, including steps S101 to S103, and will not be repeatedly described. The write signal 108 for the free carrier concentration in the modulation element 12 is supplied by the electrical signal generator 105. The two electrical interconnection devices in the metal layer of the electrical signal generator 105 transmit the generated electrical signal to the doped region of the modulation element 12 via the first contact electrode 103a and the second contact electrode 103b, respectively. The electrical signal causes the free carrier to move directionally by the electric field, and the parameter change of the electrical signal can change the free carrier concentration in the doped region, thus changing the absorption coefficient of the optical waveguide containing the free carrier for light. The electro-optic modulator based on the optical absorption effect comprises a doped region based on semiconductor doping technology, such as ion implantation or high temperature diffusion, and a pair of contact electrodes that form either an ohmic contact or a Schottky contact with the doped region.

The electrical signal generator 105 maps the multiplier value b to the absorption coefficient $\alpha$ of the optical waveguide containing the free carrier for light using an external signal, i.e. the write signal 108, and the electro-optic modulation element 12 injects a current or applies a voltage to change the free carrier concentration (charge or hole) in the doped region to change the absorption coefficient $\alpha$ of the optical waveguide containing the free carrier for light. The energy Pwrite of the external electrical signal has a mapping relationship with the optical absorption coefficient in the form of an elementary function or a rational function, the optical input signal 106 is attenuated inversely proportionally to the absorption coefficient $\alpha$ of the optical waveguide containing the free carrier for light, thereby generating the output signal 107, which corresponds to the multiplication of the external electrical signals - the write signal 108 and the optical input signal 106. The output signal Pout=$\alpha\times$Pin of the first optical waveguide 11 is the result of mapping the multiplier b to $\alpha$ and the multiplicand a to Pin.

Emerging photonic devices utilizing phase-change materials have been widely studied in recent years. Phase-change materials have the characteristics of fast read/write speed (nanosecond level), high cycle count (>$10^{12}$), and low power consumption. They are compatible with existing CMOS processes and have low technical implementation difficulty and industrial cost. The optical and electrical properties of phase-change materials are quite different between the crystalline state and amorphous state, and they can undergo phase transitions through various means, including thermal, optical, and electrical methods, and possess stable characteristics. Phase-change materials do not need to maintain a static bias voltage for light modulation, and can keep a certain state unchanged at room temperature. Therefore, the theoretical static control energy consumption of phase-change materials is zero, which greatly reduces the energy consumption of the system and improves the stability of the system. These characteristics make phase-change materials have the potential to become basic functional materials for photonic computing.

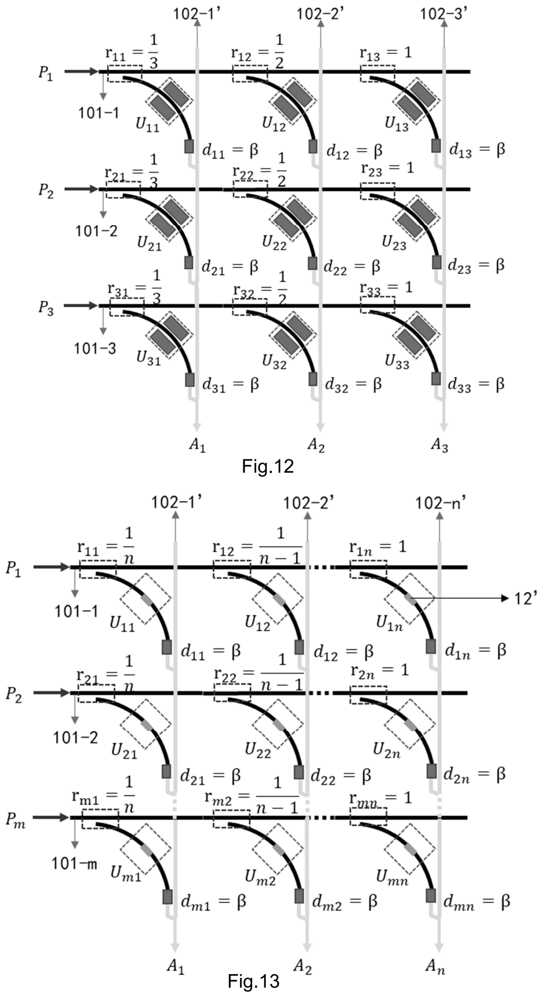

**Example 5:** As shown in FIG. 13, the hybrid optoelectronic computing array included various components in the Example 4 described above, except that the modulation element used a phase-change material 12' deposited on the first optical waveguide 11. The phase change material 12' used an optical signal as an external excitation (i.e., a write signal) to change its own state, and the own state was represented by modifying an absorption coefficient $\alpha$ of the optical waveguide comprising the phase-change material 12' for light. Choosing phase-change materials as modulation elements had the advantage of non-volatility, meaning that they could remain in the modulated state after power is cut off, making them extremely suitable for artificial intelligence inference applications. Due to the non-volatile nature of a phase-change material, compared with the technical route of an existing photonic computing chip, there was no generation of maintenance power consumption, resulting in an extremely high computing power-to-energy consumption ratio.

Specifically, by transmitting the optical signal as a write signal through the optical waveguide, for example, using a specific high-power optical signal and attaching a specific time, it was possible to change the state of the phase-change material itself, that is, to modify the absorption coefficient $\alpha$ by the optical waveguide containing the phase-change material for light. An optoelectronic hybrid computing array based on phase-change materials reduces the requirements for light sources to a certain extent and could achieve the integrated application of light sources and photonic computing chips more quickly.

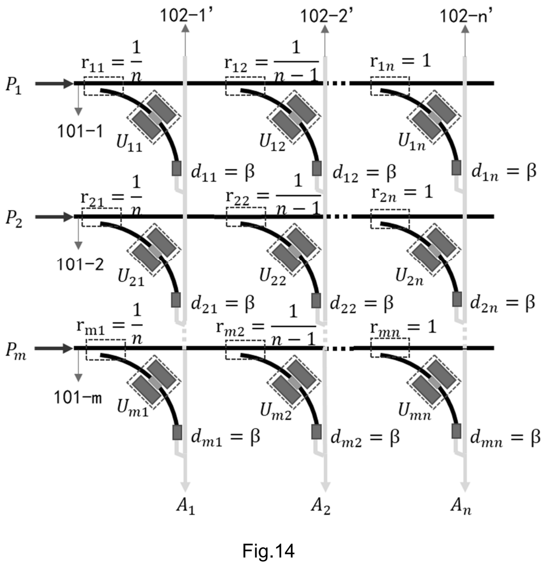

**Example 6:** As shown in FIG. 14, the hybrid optoelectronic computing array included various components in Example 4 described above, except that the modulation element was a modulator based on a phase-change material. When the optical signal was used for modulation, there was no doped region. When electrical signal modulation was used for modulation, doped regions needed to be included. In this example, an optical signal or an electrical signal could be selectively used as the write signal. Since the multiplication operation process using the electrical signal for modulation was similar to that of the preferred embodiment, and the multiplication operation process using the optical signal for modulation was similar to that of Example 2, the description thereof would not be repeated.

Of course, the multiplication operation of the present invention could also be achieved by a Mach-Zehnder interferometer (MZI) or a micro-ring resonator (MMR) of the prior art.

Photoelectric conversion device 5 was matched and connected one-to-one with an output side of the optical waveguide of the photonic computing unit 1, for converting the optical output signal into an electrical current signal, wherein a magnitude of the electrical current signal is proportional to a power of the optical output signal. Therefore, the number and position setting of the photoelectric conversion device 5 corresponded to the photonic computing unit 1 one-to-one.

The photoelectric hybrid computing array of the present invention adopted a crossbar switch matrix architecture (Crossbar), formed by the intersection of a set of input optical waveguides 31 capable of being doped and a set of the electrical buses 33. The optical input signal was transmitted through the input optical waveguide 31. The input optical waveguide 31 capable of being doped was arranged in parallel between rows, while the electrical bus 33 was arranged in parallel between columns. Preferably, the input optical waveguide capable of being doped was oriented perpendicular to the electrical bus. In the present invention, the number of rows of the input optical waveguides 31 capable of being doped is greater than or equal to 2; and the number of columns of the electrical buses 33 is greater than or equal to 2.

One photonic computing unit 1 was provided at each intersection of the input optical waveguide 31 and the electrical bus 33 in the crossbar switch matrix architecture, and the input side of the first optical waveguide 11 of each photonic computing unit 1 was coupled to an adjacent input optical waveguide 31 via a row waveguide coupler device 21, wherein the row waveguide coupler device 21 evanescently couples a portion of optical power from an adjacent input optical waveguide 31, and the coupled optical power depends on the length of the part of the waveguide coupling device 5 that is placed as the adjacent input optical waveguides and extends parallel to the adjacent input optical waveguides.

The other side of the first optical waveguide 11 was coupled to an adjacent electrical bus 33 via the photoelectric conversion device 5. Preferably, the electrical bus 33 used a metal interconnect layer on the photonic computing chip.

A plurality of parallel-connected optoelectronic conversion devices 5 were connected to each of the electrical buses 33, the electrical bus 33 sums a corresponding number of current signals converted by the plurality of parallel-connected optoelectronic conversion devices 5, generating an electrical output signal, and the sum obtained by performing an addition operation on the current signals is encoded into the electrical output signal.

The present invention adopts a crossbar switch architecture (Crossbar) to achieve large-scale matrix multiplication and addition operations. Namely, after the multiplication operation of the photonic computing unit, the optical output signal with the product is converted into a current signal by the photoelectric conversion device, and then summed on the electric bus.

In a preferred embodiment, the wavelengths of the light of the optical input signals of the input row waveguides 31 of different rows are different, so as to avoid the interference phenomenon of light during the addition operation and affect the accuracy of photonic computing. Since the present invention adopts an optoelectronic hybrid computing architecture based on the electrical bus, the wavelengths of the light of the input row waveguides 31 of different rows could be the same, thereby reducing the requirement on the wavelength of the light source.

Specifically, as shown in FIGs. 10 and 11, the present invention provides a method for performing matrix multiplication and addition operations in an optical domain, which simply includes the following steps:

S1. Providing an optoelectronic hybrid computing unit, wherein the optoelectronic hybrid computing unit comprises a photonic computing unit and an optoelectronic conversion device that are interconnected; the photonic computing unit generates an optical output signal carrying encoded information; the optoelectronic conversion device converts the optical output signal into a current signal, and a magnitude of the current signal is proportional to a power of the optical output signal;

S2. Providing an electrical bus, wherein the electrical bus sums a corresponding number of current signals converted by a plurality of parallel-connected optoelectronic conversion devices, generating an electrical output signal, and the sum obtained by performing an addition operation on the current signals is encoded into the electrical output signal.

The method achieves the calculation of an m $\times$ n order matrix P $\times$ Q = A:

$$\begin{pmatrix} P_1 \\ P_2 \\ \cdots \\ P_m \end{pmatrix}^T \begin{pmatrix} Q_{11} & Q_{12} & \cdots & Q_{1n} \\ Q_{21} & Q_{22} & \cdots & Q_{2n} \\ \cdots & \cdots & Q_{(m-1)(n-1)} & \cdots \\ Q_{1m} & Q_{2m} & \cdots & Q_{mn} \end{pmatrix} = \begin{pmatrix} A_1 \\ A_2 \\ \cdots \\ A_m \end{pmatrix}.$$

The method specifically includes the following steps:

(1) Encoding the weight matrix Q into a write signal, for example, the input code $Q_{11}$ is input into the photonic computing unit $U_{11}$ in the first row and first column, the input code $Q_{12}$ is input into the photonic computing unit $U_{12}$ in the first row and second column, the input code $Q_{21}$ is input into the photonic computing unit $U_{21}$ in the second row and first column, and so on.

(2) Mapping the multiplier value to a state of a modulation element 12 or 12' in each photonic computing unit by using the write signal, the state is represented by an absorption coefficient $\alpha$ of a first optical waveguide 11 for light.

(3) Encoding an input data matrix P to an optical input signal having its optical power equally distributed to each unit on the same row of input optical waveguides 31 by the row waveguide coupler device 21; for example, an input code $P_1$ is input into the input optical waveguide of the first row, an input code $P_2$ is input into the input optical waveguide of the second row, and so on.

(4) Generating an optical output signal after the optical input signal passes through the modulation element of the photonic computing unit 1 via the first optical waveguide 11, wherein the product of the multiplier and the multiplicand is encoded into the optical output signal, the optical power of the output optical signal is converted into a current signal by the photoelectric conversion device 5 and fed into the electrical bus 33 for summation, the magnitude of the current signal is proportional to the power of the optical output signal, the responsivity of converting the optical output signal into a current signal is $\beta$, and in practical applications, the numerical value of $\beta$ depends on a manufacturing process level of a silicon photonic chip manufacturer.

For example: the power of the optical output signal of the first column is:

$$r_{11}d_{11}P_1Q_{11} + r_{21}d_{21}P_2Q_{21} + \cdots\cdots + r_{m1}d_{m1}P_mQ_{m1} = A_1$$

$$\frac{\beta}{n}\left(P_1Q_{11} + P_2Q_{21} + \cdots\cdots + P_mQ_{m1}\right) = A_1.$$

The common factor in the above formula is $\beta/n$, and so on.

FIG. 12 illustrates a schematic diagram of a 3*3 optoelectronic hybrid computing array in an embodiment, which calculates a third-order matrix P$\times$Q=A:

$$\begin{pmatrix} P_1 \\ P_2 \\ P_3 \end{pmatrix}^T \begin{pmatrix} Q_{11} & Q_{12} & Q_{13} \\ Q_{21} & Q_{22} & Q_{23} \\ Q_{31} & Q_{32} & Q_{33} \end{pmatrix} = \begin{pmatrix} A_1 \\ A_2 \\ A_3 \end{pmatrix}.$$

wherein: 101-1, 101-2, and 101-3: input optical waveguides; 102-1', 102-2', and 102-3': electrical buses; $P_1$, $P_2$, and $P_3$: input (read) signals; $A_1$, $A_2$, and $A_3$: electrical output signals; $Q_{11}$, $Q_{12}$, $Q_{13}$, $Q_{21}$, $Q_{22}$, $Q_{23}$, $Q_{31}$, $Q_{32}$, and $Q_{33}$: input codes in the photonic computing units $U_{11}$, $U_{12}$, $U_{13}$, $U_{21}$, $U_{22}$, $U_{23}$, $U_{31}$, $U_{32}$, and $U_{33}$ used for multiplication operations; $r_{11}$, $r_{12}$, $r_{13}$, $r_{21}$, $r_{22}$, $r_{23}$, $r_{31}$, $r_{32}$, and $r_{33}$: beam splitting ratios of the waveguide coupler devices; $d_{11}$, $d_{12}$, $d_{13}$, $d_{21}$, $d_{22}$, $d_{23}$, $d_{31}$, $d_{32}$, and $d_{33}$: responsivity of an optoelectronic conversion device in converting an optical signal into an electrical current, which is $\beta$.

According to the method of the invention, the optical power output of the first column can be calculated as follows:

$$r_{11}d_{11}Q_{11}P_1 + r_{21}d_{21}Q_{21}P_2 + r_{31}d_{31}Q_{31}P_3 = \frac{\beta}{3}\left(Q_{11}P_1 + Q_{21}P_2 + Q_{31}P_3\right) = A_1$$ ,

the common factor in the formula is $\beta/3$.

Compared with the photonic computing array based on the summation via the optical bus, the present invention adopts a photoelectric hybrid computing array based on the summation via the electrical bus, and has no loss caused by the crossed waveguide and the column waveguide coupler device itself, meanwhile, because there is no cross-transmission structure in the optical path, the wavelength requirement of the input light is also lower, and each input channel may use either the same wavelength or different wavelengths.

The injected current or the applied voltage of the present invention is mainly in the form of electrical pulses, and the duration of the electrical pulses is at the nanosecond level. At the same time, the duration of the electrical pulses determines the modulation speed of the optoelectronic hybrid computing array, and then determines the computing performance of the optoelectronic hybrid computing array; at the same time, no temperature drift will occur.

It should be noted that, as used herein, the term "include", "comprise" or any other variation thereof is intended to cover a non-exclusive inclusion, such that a process, method, article or device comprising a set of elements includes not only those elements, but also includes other elements not expressly listed, or also include elements inherent in such process, method, article or device. Without further limitations, an element defined by the phrase "comprising a ..." does not exclude the presence of additional identical elements in the process, method, article, or device comprising the element.

Although embodiments of the present invention have been described above with reference to the accompanying drawings, the present invention is not limited to the above-described specific examples, which are merely illustrative and not limiting, and those skilled in the art can make many forms under the inspiration of the present invention without departing from the spirit of the present invention and the scope of the claims, all of these forms are within the protection of the present invention.

**Claims**

1.   A method for performing a computation in an optical domain using a photonic computing unit, wherein the photonic computing unit comprises a first optical waveguide and an electro-optic modulator based on an optical absorption effect, wherein the electro-optic modulator utilizes an electrical signal as an external excitation to change a concentration of a free carrier by injecting a current or applying a voltage in a doped region of the electro-optic modulator, thereby changing an absorption coefficient $\alpha$ of an optical waveguide containing the free carrier for light; when an optical signal propagated by the first optical waveguide passes through the optical waveguide containing the free carrier, the free carrier absorbs the optical signal; the method comprises the following steps:

S101. Encoding a multiplier value into a write signal;
S102. Mapping the multiplier value to a state of an electro-optic modulator by using the write signal, the state is represented by an absorption coefficient $\alpha$ of an optical waveguide for light under different concentrations of a free carrier;
S103. Encoding a multiplicand value into an input signal;
S104. Generating the intensity of the output signal when the input signal passes through the doped region of the electro-optic modulator via the first optical waveguide, wherein a product of the multiplier value and the multiplicand value is encoded into the intensity of the output signal.

2. The method for performing a computation in an optical domain using a photonic computing unit according to claim 1, wherein the size of the photonic computing unit is less than 100 $\mu$m.

3. The method for performing a computation in an optical domain using a photonic computing unit according to claim 1, wherein the absorption coefficient $\alpha$ of the optical waveguide for light under different concentrations of the free carrier exhibits at least two distinct values by the write signal.

4. The method for performing a computation in an optical domain using a photonic computing unit according to claim 1, wherein the electric signal has a voltage amplitude less than 10 V, and a duration less than 100 $\mu$s.

5. The method for performing a computation in an optical domain using a photonic computing unit according to claim 1, wherein the electro-optic modulator based on the optical absorption effect comprises the doped region based on semiconductor doping technology and a pair of contact electrodes that form either an ohmic contact or a Schottky contact with the doped region.

6. The method for performing a computation in an optical domain using a photonic computing unit according to claim 1, wherein the first optical waveguide and the electro-optic modulator are arranged in either a coplanar or a non-coplanar configuration.

7. The method for performing a computation in an optical domain using a photonic computing unit according to claim 1, wherein the moving direction of free carriers in the doped region of the electro-optic modulator by an electric field is along the direction of the first optical waveguide or perpendicular to the direction of the first optical waveguide, and the doped region is on the same side or both sides of the first optical waveguide.

8. The method for performing a computation in an optical domain using a photonic computing unit according to claim 1, wherein the photonic computing unit further comprises an optical device for performing an addition operation and a second optical waveguide, wherein the optical device for performing the addition operation is referred to as an optical adder device, and following step S104, the method further comprises the following steps:

S201. Encoding an addend value into the input signal of the second optical waveguide;
S202. Generating the intensity of the output signal through coupling the output signal of the first optical waveguide and the input signal of the second optical waveguide by the optical adder device, wherein a sum of the product and the addend value is encoded into the intensity of the output signal of the optical adder device.

9. A photonic computing array for on-chip large-scale matrix multiplication operation, wherein the photonic computing array comprises

a photonic computing unit based on an optical absorption effect of a carrier; the photonic computing unit comprises a first optical waveguide and an electro-optic modulator based on an optical absorption effect positioned on the first optical waveguide; wherein the electro-optic modulator utilizes an electrical signal as an external excitation to change a concentration of a free carrier by injecting a current or applying a voltage in a doped region of the electro-optic modulator, thereby changing an absorption coefficient $\alpha$ of an optical waveguide containing the free carrier for light, so that an optical signal passing through the first optical waveguide is absorbed by the free carrier to achieve a multiplication operation;
a crossbar switch matrix architecture; the crossbar switch matrix architecture is formed by a set of mutually parallel input row waveguides and a set of mutually parallel output column waveguides crossing each other;
the photonic computing unit for multiplication operation is provided at each intersection of the input row waveguide and the output column waveguide in the photonic computing array,
the first optical waveguide of the photonic computing units is coupled to an adjacent waveguide via a waveguide coupler device, wherein the waveguide coupler device evanescently couples a portion of optical power from an adjacent input row waveguide, the coupled optical power depends on the length of the part of the waveguide coupling device that is placed as the adjacent input row waveguides and extends parallel to the adjacent input row waveguides;

10. The photonic computing array according to claim 9, wherein the intersection of the input row waveguide and the output column waveguide that crosses it, a crossing optical waveguide is provided.

11. The photonic computing array according to claim 9, wherein the input row waveguide is perpendicular to the output column waveguide.

12. The photonic computing array according to claim 9, wherein the wavelength of light in the input optical signal of the input row waveguide in different rows is different.

13. The photonic computing array according to claim 9, wherein the waveguide coupler device is operable to distribute optical power of the input optical signal evenly to each photonic computing unit in the same row.

14. The photonic computing array according to claim 9, wherein the number of rows of input row waveguides of the photonic computing array is greater than or equal to 2, and the number of columns of output column waveguides of the photonic computing array is greater than or equal to 2.

15. The photonic computing array according to claim 9, wherein the size of the photonic computing unit is less than 100 $\mu$m.

16. The photonic computing array according to claim 9, wherein the electric signal as the external excitation has a voltage amplitude less than 10 V, and a duration less than 100 $\mu$s.

17. The photonic computing array according to claim 9, wherein the first optical waveguide and the electro-optic modulator are arranged in either a coplanar or a non-coplanar configuration.

18. The photonic computing array according to any one of claims 9 to 17, wherein an input end of the input row waveguide of the photonic computing array is connected to a multiplexer (MUX), and an output end of the output column waveguide is connected to a demultiplexer (DEMUX).

19. An optoelectronic hybrid computing array for on-chip large-scale matrix multiplication operation, wherein the optoelectronic hybrid computing array comprises a set of photonic computing units with each comprising a first optical waveguide and a modulation element optically coupled to the first optical waveguide, wherein the modulation element modifies the transmission, reflection, refraction, or absorption characteristics of the first optical waveguide according to a state of the modulation element, and the state of the modulation element is adjustable by a write signal; the state is represented by an absorption coefficient $\alpha$ or a refractive index n of an optical waveguide for light; an optical input signal passes through the photonic computing unit to generate an optical output signal, wherein a product of a multiplier value and a multiplicand value is encoded into the optical output signal;

a set of photoelectric conversion devices with each matched and connected one-to-one with an output side of the first optical waveguide of the photonic computing unit, for converting the optical output signal into an electrical current signal, wherein a magnitude of the electrical current signal is proportional to a power of the optical output signal;

a crossbar switch matrix architecture; the crossbar switch matrix architecture is formed by a set of mutually parallel input optical waveguides and a set of mutually parallel electrical buses crossing each other; the optical input signal is transmitted through the input optical waveguide;

in the crossbar switch matrix architecture, one of the photonic computing units is provided at each intersection of the input optical waveguide and the electrical bus, an input side of the first optical waveguide of each of the photonic computing units is coupled to an adjacent input optical waveguide via a waveguide coupler device, wherein the waveguide coupler device evanescently couples a portion of optical power from the adjacent input optical waveguide, the coupled optical power depends on the length of the part of the waveguide coupling device that is placed as adjacent input optical waveguides and extends parallel to the adjacent input optical waveguides; a plurality of parallel-connected optoelectronic conversion devices is connected to each of the electrical buses, the electrical bus sums a corresponding number of current signals converted by the plurality of parallel-connected optoelectronic conversion devices, generating an electrical output signal, and the sum obtained by performing an addition operation on the current signals is encoded into the electrical output signal.

20. The optoelectronic hybrid computing array according to claim 19, wherein the input optical waveguide and the electrical bus are perpendicular to each other.

21. The optoelectronic hybrid computing array according to claim 19, wherein the wavelength of light in the optical input signal of the input optical waveguide in a different row may be different or the same.

22. The optoelectronic hybrid computing array according to claim 19, wherein the waveguide coupler device is operable to distribute optical power of the input optical signal evenly to each of the photonic computing units in the same row.

23. The optoelectronic hybrid computing array according to claim 19, wherein the number of columns of the input optical waveguides is greater than or equal to 2; and the number of columns of the electrical buses is greater than or equal to 2.

24. The optoelectronic hybrid computing array according to claim 19, wherein the electrical bus is a metal interconnect layer on a photonic computing chip.

25. An optoelectronic hybrid computing method for on-chip large-scale matrix multiplication operation, wherein the optoelectronic hybrid computing method comprises the following steps:

S1. Providing an optoelectronic hybrid computing unit, wherein the optoelectronic hybrid computing unit comprises a photonic computing unit and an optoelectronic conversion device that are interconnected; the photonic computing unit generates an optical output signal carrying encoded information; the optoelectronic conversion device converts the optical output signal into a current signal, and a magnitude of the current signal is proportional to a power of the optical output signal;

S2. Providing an electrical bus, wherein the electrical bus sums a corresponding number of current signals converted by a plurality of parallel-connected optoelectronic conversion devices, generating an electrical output signal, and the sum obtained by performing an addition operation on the current signals is encoded into the electrical output signal.

26. The optoelectronic hybrid computing method according to claim 25, wherein in step S1, "the photonic computing unit generates an optical output signal carrying encoded information" specifically comprises:

S11. Providing a write signal, wherein a multiplier value is encoded into the write signal;

S12. Using the write signal to map the multiplier value to a state of the photonic computing unit, the photonic computing unit comprises a first optical waveguide and a modulation element optically coupled to the first optical waveguide, wherein the modulation element modifies the transmission, reflection, refraction, or absorption characteristics of the first optical waveguide according to a state of the modulation element, and the state of the modulation element is adjustable by a write signal; the state is represented by an absorption coefficient $\alpha$ or a refractive index n of an optical waveguide for light;

S13. Encoding a multiplicand value into an optical input signal of the photonic computing unit; the optical input signal passes through the photonic computing unit to generate the optical output signal, wherein a product of the multiplier value and the multiplicand value is encoded into the optical output signal.

27. The optoelectronic hybrid computing method according to claim 26, wherein the modulation element is an electro-optic modulator based on a light absorption effect, the electro-optic modulator utilizes an electrical signal as an external excitation to change a concentration of a free carrier by injecting a current or applying a voltage in a doped region of the electro-optic modulator, thereby changing the absorption coefficient $\alpha$ of an optical waveguide containing the free carrier for light, so that the optical signal passing through the first optical waveguide achieves a multiplication operation.

28. The optoelectronic hybrid computing method according to claim 26, wherein the modulation element is a phase-change material deposited on the first optical waveguide, the phase-change material is operable to optionally alter its own state in response to an optical signal as an external excitation, and the own state is manifested by modifying the absorption coefficient $\alpha$ of an optical waveguide comprising the phase-change material for light.

29. The optoelectronic hybrid computing method according to claim 25, wherein in step S1, "the photonic computing unit generates an optical output signal carrying encoded information" is implemented using a Mach-Zehnder interferometer (MZI) or a micro-ring resonator (MMR).

30. The optoelectronic hybrid computing method according to claim 25, wherein the electrical bus is a metal interconnect layer on a photonic computing chip.

| Encoding a multiplier value into a write signal | S101 |

↓

| Mapping the multiplier value to a state of an electro-optic modulator by using the write signal, the state is represented by an absorption coefficient α of a optical waveguide for light under different concentrations of a free carrie | S102 |

↓

| Encoding a multiplicand value into an input signal | S103 |

↓

| Generating the intensity of an output signal when the input signal passes through adoped region of the electro-optic modulator via a first optical waveguide, wherein aproduct of the multiplier value and the multiplicand value is encoded in the intensity of the output signal | S104 |

Fig. 1

Fig. 2

a     ✖     b     =     c

106

107

$P_{in}$

$\alpha$

111

$P_{out}$

108

$P_{write}$

Fig. 3

12

11

110

103a

104a

103b

109

105

104b

Fig. 4

a     ✖     b     +     d     =     e

106

112

113

110

$P_{in}$

$\alpha$

111

$P_{out}$

108

$P_{write}$

Fig. 5

Fig. 6

Fig. 7

21

Fig. 8

Fig. 9

S1

Providing an optoelectronic hybrid computing unit, wherein the optoelectronic hybrid computing unit comprises a photonic computing unit and an optoelectronic conversion device that are interconnected; the photonic computing unit generates an optical output signal carrying encoded information; the optoelectronic conversion device converts the optical output signal into a current signal, and a magnitude of the current signal is proportional to a power of the optical output signal

Providing an electrical bus, wherein the electrical bus sums a corresponding number of current signals converted by a plurality of parallel-connected optoelectronic conversion devices, generating an electrical output signal, and the sum obtained by performing addition operation on the current signals is encoded into the electrical output signal

S2

Fig.10

Fig.11

Fig.12

Fig.13

Fig.14

## INTERNATIONAL SEARCH REPORT

| International application No. |
| --- |
| **PCT/CN2024/089613** |

### A. CLASSIFICATION OF SUBJECT MATTER

G06E3/00(2006.01)i; G02F 1/025(2006.01)i

According to International Patent Classification (IPC) or to both national classification and IPC

### B. FIELDS SEARCHED

Minimum documentation searched (classification system followed by classification symbols)

IPC: G06E, G02F, H04B

Documentation searched other than minimum documentation to the extent that such documents are included in the fields searched

Electronic data base consulted during the international search (name of data base and, where practicable, search terms used)

CNABS, CNTXT, CJFD, VEN, ENTXTC, IEEE: 光子, 计算, 乘法, 加法, 波导, 调制器, 吸收, 载流子, 浓度, 矩阵, 功率, 总线, photon+, calculat+, multipli+, add+, plus+, waveguide, modulator, absor+, carrier, concentration, matrix, power, bus

### C. DOCUMENTS CONSIDERED TO BE RELEVANT

| Category* | Citation of document, with indication, where appropriate, of the relevant passages | Relevant to claim No. |
| --- | --- | --- |
| PX | CN 117896011 A (GUANGBENWEI TECHNOLOGY (SUZHOU) CO., LTD.) 16 April 2024 (2024-04-16)<br>claims 1-8 | 1-8 |
| PX | CN 116736933 A (GUANGBENWEI TECHNOLOGY (SUZHOU) CO., LTD.) 12 September 2023 (2023-09-12)<br>claims 1-10 | 9-18 |
| PX | CN 116932459 A (GUANGBENWEI TECHNOLOGY (SUZHOU) CO., LTD.) 24 October 2023 (2023-10-24)<br>claims 1-12 | 19-30 |
| X | CN 111684343 A (UNIVERSITY OXFORD INNOVATION LTD) 18 September 2020 (2020-09-18)<br>description, paragraphs [0007]-[0331], and figures 1-2 and 43-45 | 19-26, 28-30 |
| Y | CN 111684343 A (UNIVERSITY OXFORD INNOVATION LTD.) 18 September 2020 (2020-09-18)<br>description, paragraphs [0007]-[0331], and figures 1-2 and 43-45 | 1-18, 27 |

☑ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 July 2024** | **29 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/089613**

**C.    DOCUMENTS CONSIDERED TO BE RELEVANT**

| Category* | Citation of document, with indication, where appropriate, of the relevant passages | Relevant to claim No. |
|---|---|---|
| Y | CN 1479136 A (SHANGHAI INSTITUTE OF MICROSYSTEM AND INFORMATION TECHNOLOGY, CHINESE ACADEMY OF SCIENCES) 03 March 2004 (2004-03-03) description, page 1 line 7-page 2 line 12 | 1-18, 27 |
| A | US 2022012013 A1 (INTERNATIONAL BUSINESS MACHINES CORP. et al.) 13 January 2022 (2022-01-13) entire document | 1-30 |
| A | DE 102021121918 A1 (WESTFAELISCHE WILHELMS-UNIVERSITAET MUENSTER) 02 March 2023 (2023-03-02) entire document | 1-30 |

Form PCT/ISA/210 (second sheet) (July 2022)

## INTERNATIONAL SEARCH REPORT
### Information on patent family members

| International application No. |
| --- |
| **PCT/CN2024/089613** |

| Patent document cited in search report | | | Publication date (day/month/year) | Patent family member(s) | | | Publication date (day/month/year) |
| --- | --- | --- | --- | --- | --- | --- | --- |
| CN | 117896011 | A | 16 April 2024 | None | | | |
| CN | 116736933 | A | 12 September 2023 | None | | | |
| CN | 116932459 | A | 24 October 2023 | None | | | |
| CN | 111684343 | A | 18 September 2020 | US | 2020341503 | A1 | 29 October 2020 |
| | | | | US | 11650617 | B2 | 16 May 2023 |
| | | | | EP | 3714322 | A1 | 30 September 2020 |
| | | | | GB | 201719346 | D0 | 03 January 2018 |
| | | | | WO | 2019102176 | A1 | 31 May 2019 |
| CN | 1479136 | A | 03 March 2004 | None | | | |
| US | 2022012013 | A1 | 13 January 2022 | US | 11556312 | B2 | 17 January 2023 |
| DE | 102021121918 | A1 | 02 March 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023104732135
- CN 2023106690334
- CN 2023109655493
- CN 111158636 A
- CN 115905792 A
- CN 113392965 A
- CN 10407644 A
- CN 116107037 A